# EUROPÄISCHE PATENTSCHRIFT

(11) **EP 2 292 307 B1**
(45) Veröffentlichungstag und Bekanntmachung des Hinweises auf die Patenterteilung: **12.09.2012**
(21) Anmeldenummer: 09010431.6
(22) Anmeldetag: 13.08.2009
(51) Int. Cl.: B01D 25/26, B01D 63/08

(54) **Membranfiltermodul**
Membrane filter module
Module de filtre de membrane

(43) Veröffentlichungstag der Anmeldung: 09.03.2011
(73) Patentinhaber: Dauborn MembranSysteme für Wasserbehandlung GmbH, 23909 Ratzeburg (DE)
(72) Erfinder: Reinhardt Eugen, 23909 Ratzeburg (DE)
(74) Vertreter: Hemmer, Arnd

(56) Entgegenhaltungen:
- EP-A1- 0 238 737
- US-A- 5 536 405
- US-A1- 2007 144 956

## Beschreibung

Die Erfindung betrifft ein Membranfiltermodul.

Beispielsweise aus EP 0 897 319 B1 sowie US 6,209,727 B1 sind derartige Membranfiltermodule bekannt. Diese Filtermodule bestehen aus einer Vielzahl von übereinander geschichteten Membranen, wobei abwechselnd zwischen den Membranen jeweils Strömungswege bzw. flächige Strömungskanäle zur Zufuhr des Mediums sowie Abfuhr des Filtrats ausgebildet sind. In den Zufuhrwegen für das zu filternde Medium sind darüber hinaus Rotoren angeordnet, welche über eine zentrale Welle drehend angetrieben werden, um das zugeführte Medium über den Membranen verteilen. Die Zufuhr des Mediums in den Strömungswegen zwischen den Membranen sowie die Abfuhr des Filtrates aus den Strömungswegen zwischen den Membranen erfolgt vom Außenumfang her. Als Träger für die Membranen sind in der Regel kompliziert geformte Membranträgerplatten aus Kunststoff erforderlich, welche kostenaufwändig zu fertigen sind. Darüber hinaus benötigen diese Module aufgrund der Membranträgerplatten einen relativ großen Bauraum.

US 2007/0144956 A1 offenbart ein Membranfiltermodul, bei welchem die Membranen auf Membranträgerplatten aufgebracht sind. Für die Fluidzufuhr sind in der Membranträgerplatte Löcher ausgebildet. Die Membranen sind im Umfangsbereich der Löcher jeweils mit der Oberfläche der Membranträgerplatten dichtend verklebt. Dies ist recht aufwändig. Darüber hinaus ist die Wiederverwertung der Membranträgerplatten bei Austausch der Membranen schwierig oder nicht möglich, da hierzu die Verklebung im Umfang des Durchgangsloches gelöst werden müsste und es dabei zu einer Beschädigung der Membranträgerplatte kommen kann.

Es ist Aufgabe der Erfindung, ein verbessertes Membranfiltermodul bereitzustellen, welches einen kompakten Aufbau aufweist und kostengünstiger zu fertigen und zu warten ist als herkömmliche Membranfiltermodule.

Diese Aufgabe wird durch ein Membranfiltermodul mit den im Anspruch 1 angegebenen Merkmalen gelöst. Bevorzugte Ausführungsformen ergeben sich aus den Unteransprüchen, der nachfolgenden Beschreibung sowie den beigefügten Figuren.

Wie die bekannten Membranfiltermodule ist auch das erfindungsgemäße Membranfiltermodul aus einer Vielzahl von übereinanderliegend angeordneten Membranen gebildet. Die Membranen liegen so übereinander, dass ihre Oberflächen sich im Wesentlichen parallel zueinander erstrecken und die Membranen im Wesentlichen deckungsgleich übereinanderliegen. Zwischen jeweils zwei benachbarten Membranen sind abwechselnd erste und zweite Strömungswege ausgebildet. Bei der Vielzahl von Membranen wechseln sich somit die ersten und zweiten Strömungswege immer ab. Der erste Strömungsweg dient der Zufuhr des zu filternden Mediums sowie der Konzentratabfuhr, während der zweite Strömungsweg der Filtratabfuhr dient. Aufgrund der abwechselnden Anordnung von ersten und zweiten Strömungswegen dient ein erster Strömungsweg immer zur Zufuhr des Mediums zu zwei einander gegenüberliegenden Membranoberflächen zweier benachbarter Membranen.

Erfindungsgemäß ist es nun vorgesehen, dass der Zufuhrkanal, welcher mehrere der ersten Strömungswege miteinander verbindet und durch welchen das Medium den ersten Strömungswegen zugeführt wird, nicht, wie es aus dem Stand der Technik her bekannt ist, am Außenumfang der Membranen gelegen ist, sondern im Inneren des Außenumfanges gelegen ist. Das heißt, der Kanal erstreckt sich durch die Membranflächen hindurch. Auf diese Weise wird eine sehr kompakte und Platz sparende Anordnung geschaffen. Dabei ist bevorzugt ein Kanal vorgesehen, welcher sich zusätzlich zu einer Rotorwelle durch die Membranen in Richtung normal zu den Membranoberflächen hindurch erstreckt. Der zumindest eine Zufuhrkanal, welcher die ersten Strömungswege miteinander verbindet, ist vorzugsweise im Bereich der äußeren Hälfte des Radius der Membranen gelegen, besonders bevorzugt nahe dem Außenumfang, jedoch vom Außenumfang bevorzugt beabstandet.

Zwischen den Membranen, welche einen zweiten Strömungsweg begrenzen, ist jeweils eine Membranträgerplatte angeordnet. Diese Membranträgerplatten fixieren die Membranen so, dass sie im Wesentlichen plan und parallel zueinander liegen. Aufgrund der abwechselnden Anordnung liegt somit zwischen einer ersten und einer zweiten Membran eine Membranträgerplatte, zwischen der zweiten und der dritten Membran ist ein erster Strömungsweg ausgebildet, zwischen der dritten und vierten Membran liegt wieder eine Membranträgerplatte, und zwischen der vierten und fünften Membran ist wieder ein erster Strömungsweg ausgebildet, und so weiter. Die zweiten Strömungswege verlaufen dabei jeweils entlang der Oberflächen der Membranträgerplatten zwischen den Oberflächen der Membranträgerplatte und den angrenzenden Membranen.

Die Membranträgerplatten sind jeweils vorzugsweise als Scheiben mit planen Oberflächen ausgebildet. Dies ermöglicht eine sehr kostengünstige Ausgestaltung, da die Membranträgerplatten einfach aus einem Plattenmaterial geschnitten werden können und keinerlei Strukturierung an der Oberfläche bedürfen. So werden die Membranträgerplatte weiter bevorzugt aus Metall, beispielsweise rostfreiem Edelstahl gefertigt. Dies ermöglicht es, die Membranträgerplatten bei gleicher Stabilität deutlich dünner auszugestalten, als es bei den im Stand der Technik verwendeten Membranträgerplatten aus Kunststoff der Fall war. Die dünnere Ausgestaltung der Membranträgerplatten führt bei einer Vielzahl von übereinander geschichteten Membranen mit dazwischenliegenden Membranträgerplatten insgesamt zu einer deutlich geringeren Baulänge des gesamten Membranfiltermoduls.

Zwischen den Oberflächen der Membrantragerplatte und den angrenzenden Membranen ist weiter bevorzugt jeweils ein Abstandsmaterial angeordnet, durch welches der zweite Strömungsweg verläuft. Das Abstandsmaterial ist ein poröses Material, beispielsweise ein Vlies, durch welches das Filtrat strömen kann. Das Abstandsmaterial hält somit die angrenzenden Membranen in einem Abstand zu den Oberflächen der Membranträgerplatten, so dass zwischen Membran und Membranträgerplatte ein flächiger Strömungsweg für die Filtratabfuhr geschaffen wird.

Der Zufuhrkanal ist durch jeweils zumindest ein Loch in den Membranträgerplatten gebildet wird. Ein solches Loch kann sehr einfach in die planen Membranträgerplatten eingeschnitten oder in anderer Weise eingearbeitet sein. Durch die aufeinanderfolgenden Löcher der einzelnen Membranträgerplatten wird somit ein Zufuhrkanal zu den ersten Strömungswegen durch einen Teil, vorzugsweise durch das gesamte Membranfiltermodul geschaffen.

Die zwei eine Membranträgerplatte einschließenden Membranen, d. h. die an den entgegengesetzten Oberflächen der Membranträgerplatte an diese angrenzenden Membranen, sind am inneren Umfang des Loches in der Membranträgerplatte miteinander verbunden, bevorzugt verschweißt. So kann eine ringförmige Schweißnaht am Innenumfang des Loches gebildet sein. Im Inneren der ringförmigen Schweißnaht ist dann vorzugsweise ebenfalls ein Loch durch die Membrane ausgebildet, so dass der Zufuhrkanal sich dort durch die Membran hindurch erstrecken kann. Die Membranen können jedoch auch in anderer geeigneter Weise dicht verbunden sein, z. B. verklebt oder geklemmt. Der Zufuhrkanal wird auf diese Weise lediglich durch aufeinandergestapelte Löcher in den Membranen und den Membranträgerplatten gebildet, ohne dass ein zusätzliches Rohr oder ähnliches erforderlich ist. Die Löcher in den mehreren Membranen bzw. Membranträgerplatten können dabei fluchtend übereinanderliegen. Gemäß einer weiteren bevorzugten Ausführungsform können jedoch die den Zufuhrkanal definierenden Löcher in den einzelnen Membranträgerplatten und entsprechend die im Bereich dieser Löcher ausgebildeten Löcher in den Membranen zueinander versetzt angeordnet sein. Das heißt, bei der Vielzahl von übereinandergestapelten Membranträgerplatten liegen die einzelnen Löcher in den Membranträgerplatten nicht fluchtend übereinander, sondern sind von Membranträgerplatte zu Membranträgerplatte zueinander versetzt angeordnet. Auf diese Weise wird eine bessere Verteilung des zugeführten Mediums im Filtermodul erreicht. Vorzugsweise sind die Membranträgerplatten alle identisch ausgebildet, das heißt, auch die Löcher sind identisch ausgebildet. Zum Versatz der Löcher werden die Membranträgerplatten lediglich um ihre Mittelachse in ihrer Winkellage versetzt zueinander angeordnet. Auf diese Weise kann über die gesamte Länge des Membranfiltermoduls gesehen ein schraubenförmiger Verlauf der Lage der Löcher erreicht werden. Es ist jedoch auch denkbar, abschnittsweise die Löcher fluchtend zueinander anzuordnen und lediglich zwischen den einzelnen Abschnitten die Lage der Löcher zueinander zu versetzen.

Die ersten Strömungswege zwischen den Membranen sind, wie oben beschrieben, bevorzugt als Freiräume ausgebildet, in welchen sich jeweils ein Rotor befindet, welcher dazu dient, das Medium in dem Freiraum zu verteilen, so dass die Membranen gleichmäßig mit dem Medium überströmt werden. Durch die Anordnung des Zufuhrkanals in der äußeren Hälfte der Membran befindet sich die Zufuhr da, wo sich der Rotor mit größter Geschwindigkeit über die Membran bewegt. So wird das durch den Zufuhrkanal einströmende Medium besonders effektiv verteilt.

Die einzelnen Rotoren sind vorzugsweise auf einer gemeinsamen Rotorwelle angeordnet, welche sich durch jeweils ein zentrales Loch in den Membranträgerplatten erstreckt. Die zentrale Rotorwelle wird, wie es von bekannten Membranfiltermodulen her bekannt ist, durch einen Antriebsmotor, welcher vorzugsweise auf der Unterseite des Membranfiltermoduls angeordnet ist, drehend angetrieben. Das zentrale Loch ist, wie beschrieben, beabstandet von dem Loch für den Zufuhrkanal angeordnet.

Die eine Membranträgerplatte einschließenden Membranen sind ferner auch am Innenumfang des zentralen Loches miteinander verbunden, bevorzugt verschweißt, und weisen im Inneren der so gebildeten ringförmigen Naht bzw. Schweißnaht ein Loch auf, durch welches sich die Rotorwelle erstreckt. Die Ausgestaltung der Schweißnaht ist insofern ähnlich wie die Schweißnaht in dem Loch für den Zufuhrkanal. Auch hier könnte eine geeignete andere dichte Verbindung zwischen den Membranen zum Einsatz kommen.

Die zweiten Strömungswege, welche der Filtratabfuhr dienen, sind bevorzugt zum Außenumfang der Membranen hin geöffnet, das heißt, das Filtrat tritt am Außenumfang des Filtermoduls aus und wird dort in einer Hülle, die den Filter umfasst, gesammelt und abgeführt. Das zu filternde Medium wird vorzugsweise durch ein Loch in der Bodenplatte oder der oberen Platte des Stapels aus Membranen in den Zufuhrkanal eingeleitet. Am entgegengesetzten Ende des Membranfiltermoduls tritt dann entsprechend das Konzentrat aus dem Zufuhrkanal aus.

Zwischen den Membranen, welche jeweils den ersten Strömungsweg begrenzen, ist weiter bevorzugt am Außenumfang der Membran jeweils ein äußerer Distanzring angeordnet. Dieser sorgt dafür, dass die den ersten Strömungsweg begrenzenden Membranen sowie die hinter diesen liegenden Membranträgerplatten auf definiertem Abstand gehalten werden, so dass zwischen den Membranen ein Freiraum entsteht, in welchem der Rotor rotieren kann.

Die gesamte Anordnung der übereinanderliegenden Membranen mit ggf. dazwischen liegenden Abstandsmaterialien und Membranträgerplatte wird bevorzugt durch Führungsstangen fixiert, welche außerhalb des Außenumfanges der Membranen angeordnet sind. Dies ermöglicht eine sehr einfache Montage. Die Führungsstangen fixieren die Membranträgerplatten mit den daran angeordneten Membranen dabei insbesondere in radialer Richtung, so dass sie sich in radialer Richtung nicht gegeneinander verschieben können. In axialer Richtung werden die übereinandergestapelten Membranen mit den zwischenliegenden Membranträgerplatten durch eine Boden- und eine Deckelplatte fixiert bzw. aufeinander gepresst.

Zur Fixierung sind die Führungsstangen bevorzugt mit dem Außenumfang von zwischen den Membranen angeordneten Membranträgerplatten und/oder äußeren Distanzringen in Kontakt. Vorzugsweise werden sowohl die Distanzringe als auch die Membranträgerplatten am Außenumfang durch die Führungsstangen fixiert.

Dazu können an den Führungsstangen Distanzstücke angeordnet sein, welche jeweils mit dem Außenumfang der Membranträgerplatten und den äußeren Distanzringen in Kontakt sind. Die Distanzstücke können dabei so ausgestaltet sein, dass jeweils ein Distanzstück zur Kontaktierung eines Distanzringes und einer angrenzenden Membranträgerplatte vorgesehen ist. Die Distanzstücke können profiliert sein, um bei unterschiedlichen Außendurchmessern von Distanzring und Membranträgerplatte beide am Außenumfang kontaktieren zu können. So kann der Distanzring vorzugsweise einen größeren Außendurchmesser als die Membranträgerplatte aufweisen.

Nachfolgend wird die Erfindung beispielhaft anhand der beigefügten Figuren beschrieben. In diesen zeigt:
- Fig. 1: schematisch ein Membranfiltersystem mit einem Memb- ranfiltermodul gemäß der Erfindung,
- Fig. 2: eine Draufsicht auf das Membranfiltermodul gemäß Fig. 1,
- Fig. 3: eine Schnittansicht entlang der Linie III-III in Fig. 2,
- Fig. 4: vergrößert den Ausschnitt IV aus Fig. 3,
- Fig. 5: vergrößert den Ausschnitt V aus Fig. 3 und
- Fig. 6: eine vergrößerte geschnittene Ansicht des Ausschnitts VI in Fig. 1.

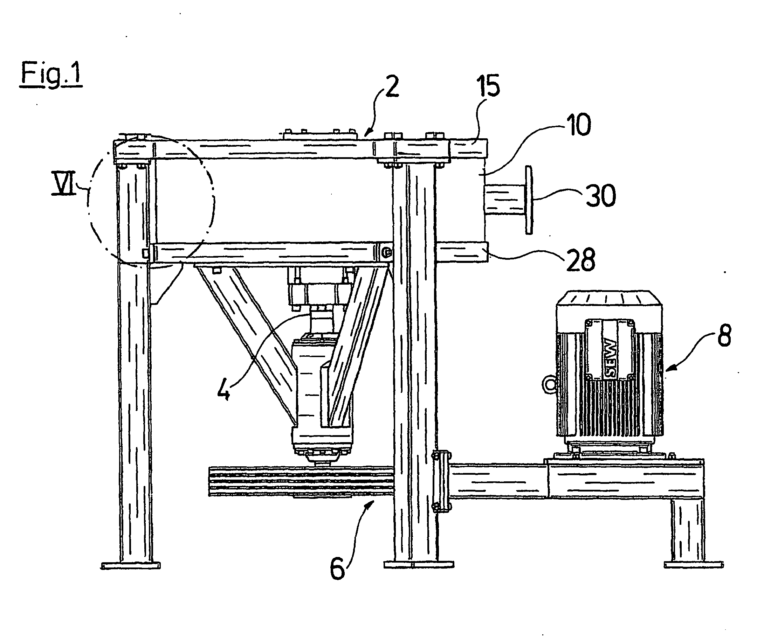

Das in Fig. 1 gezeigte Membranfiltersystem weist ein Membranfiltermodul 2 auf, in welchem eine zentrale Rotorwelle 4 angeordnet ist, welche über einen Riementrieb 6 von einem elektrischen Antriebsmotor 8 drehend angetrieben wird.

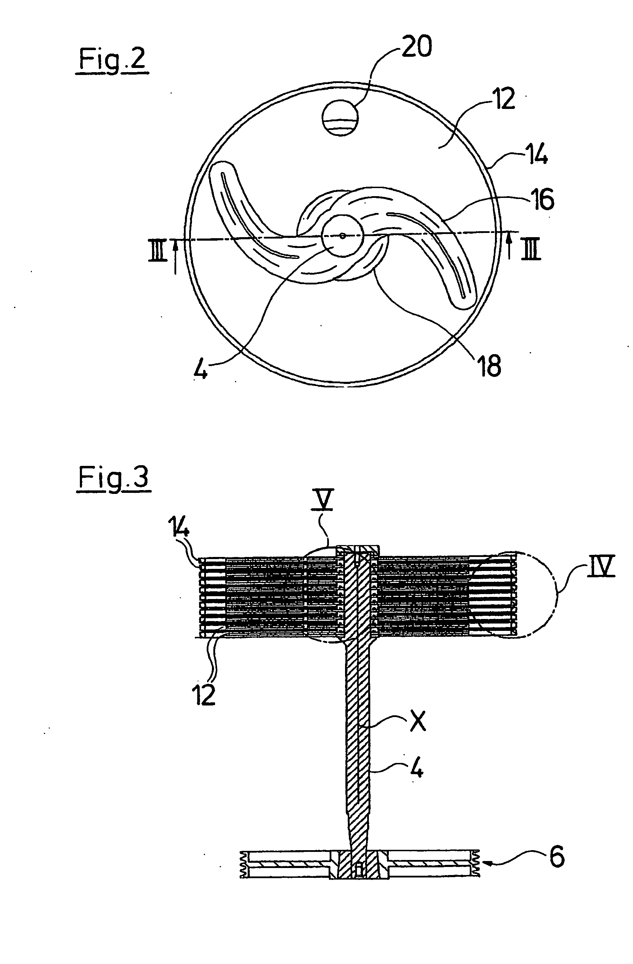

Fig. 2 zeigt eine Draufsicht auf den im Inneren des Gehäuses 10 gelegenen Teil des Membranfiltermoduls 2. Zu erkennen ist in Fig. 2 von oben die oberste Membranträgerplatte 12. An deren Außenumfang ist auf diese aufgesetzt ein äußerer Distanzring 14. Dieser sorgt dafür, dass ein definierter Abstand zu der darüberliegenden Membranträgerplatte 12 bzw. Deckelplatte 15 verbleibt. Ferner hält der Distanzring 14 am Au-Benumfang die über der Membranträgerplatte 12 liegende Membran in Anlage mit der Membranträgerplatte 12 bzw. einem auf dieser angeordneten Abstandsmaterial. Die Membranträgerplatte 12 selbst ist als plane Scheibe ausgebildet und bevorzugt aus einem planen Blech, bevorzugt Edelstahlblech geschnitten.

Oberhalb der Membranträgerplatte 12 in dem von dem Distanzring 14 umschlossenen Freiraum ist ein Rotor 16 angeordnet, welcher drehfest mit der Rotorwelle 4 verbunden ist und somit von dieser drehend angetrieben wird. Die Rotorwelle 4 erstreckt sich durch ein zentrales Loch 18 in der Membranträgerplatte 12. Die Membranträgerplatte 12 weist darüber hinaus ein zweites Loch auf, welches radial nach außen beabstandet zu dem zentralen Loch 18 angeordnet ist. Das Loch 20 bildet Teil eines Zufuhrkanals, durch welchen das zu filternde Medium bzw. Fluid zugeführt wird. Der Rotor 16 verteilt dieses Fluid über der Membran.

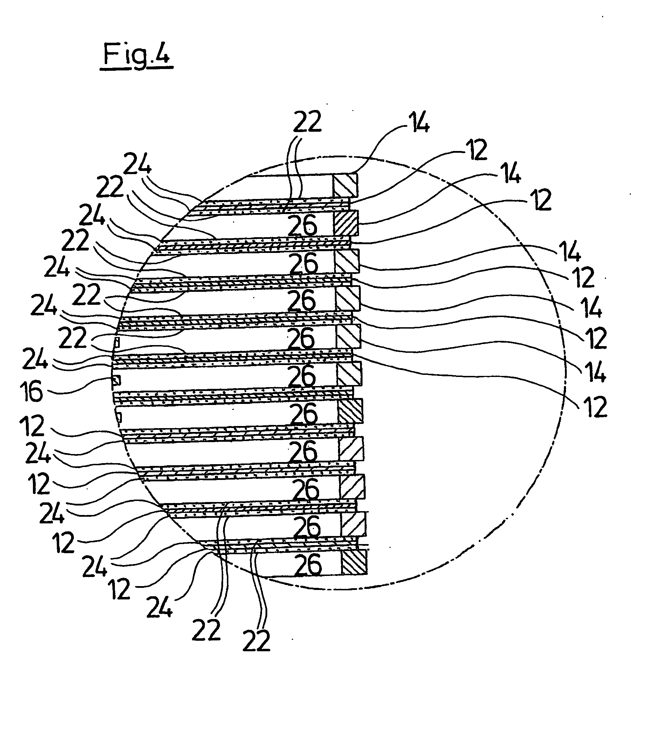

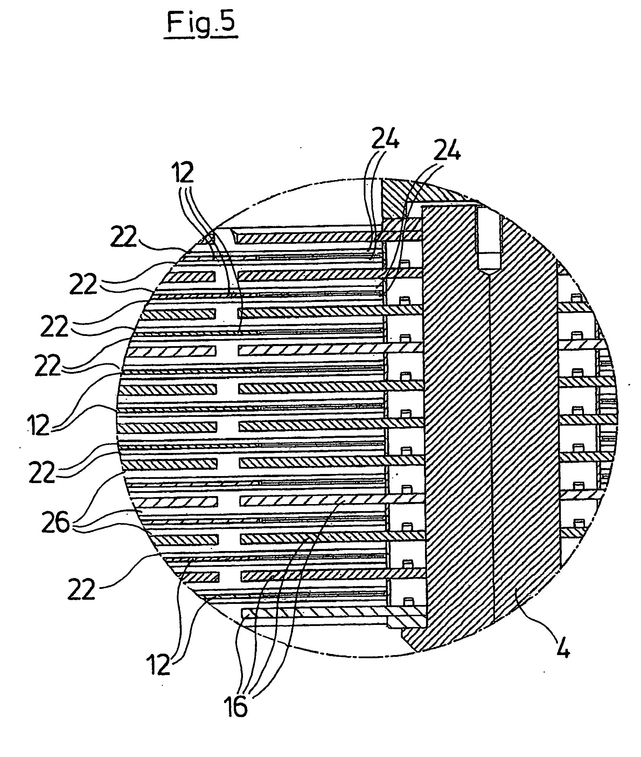

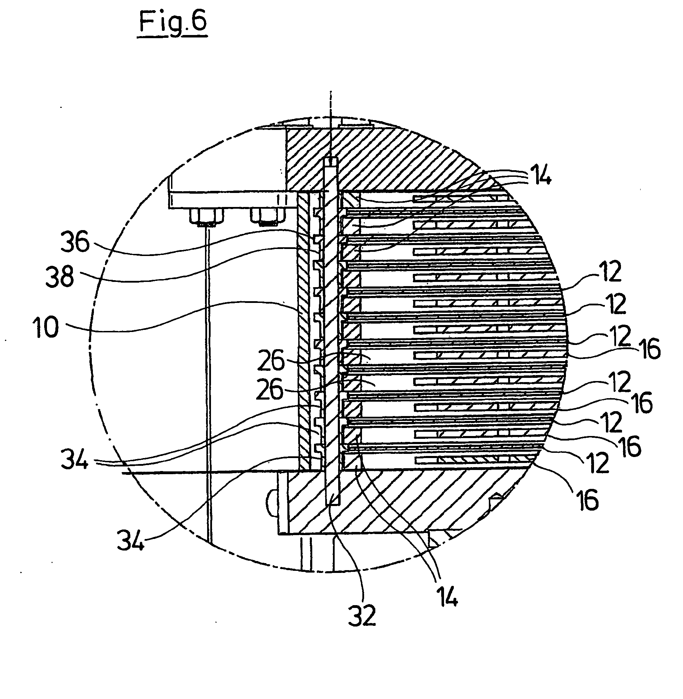

Der weitere Aufbau des Membranfiltermoduls wird nun anhand der Schnittansicht in Fig. 3 sowie der vergrößerten Ausschnittsansichten in Figuren 4 bis 6 erläutert.

Das Membranfiltermodul 2 weist eine Vielzahl von übereinandergelegenen Membranen 22 auf. Im gezeigten Beispiel sind zwanzig Membranen 22 vorgesehen, welche über zehn Membranträgerplatten 12 angeordnet sind. Die Membranen 22 liegen nicht direkt an den Membranträgerplatten 12 an, sondern werden von einem Abstandsmaterial 24 in Abstand zu der Membranträgerplatte 12 gehalten. Das Abstandsmaterial 24 ist flüssigkeitsdurchlässig, so dass es einen flächigen Strömungsweg zwischen der Membran 22 und der an diese angrenzende Membranträgerplatte 12 bildet. Durch das Abstandsmaterial 24 wird das Filtrat abgeführt.

Wie beschrieben erfolgt die Zufuhr des zu filternden Mediums bzw. Fluid durch die Löcher 20. In jeder der Membranträgerplatten 12 ist ein solches Loch 20 ausgebildet. Dabei sind die kreisförmigen Membranträgerplatten 12 alle identisch ausgebildet, jedoch bezogen auf die Längsachse der Rotorwelle 4 derart verdreht zueinander angeordnet, dass die Löcher 20 in den einzelnen Membranträgerplatten 12 nicht miteinander fluchten. Durch die Löcher 20 wird das zu filternde Medium in erste Strömungswege 26 zwischen den Membranen 22 geleitet. Die ersten Strömungswege 26 bilden flächige Strömungswege jeweils zwischen zwei Membranen 22 an deren von den Membranträgerplatten 12 abgewandten Seiten. So wechseln sich zwischen den Membranen 22 die ersten Strömungswege 26 in Form von Freiräumen und die zweiten Strömungswege, gebildet durch das Abstandsmaterial 24, regelmäßig ab. In den die ersten Strömungswege 26 bildenden Freiräumen sind jeweils die Rotoren 16 angeordnet. Die Konzentratabfuhr erfolgt ebenfalls durch den von Löchern 20 gebildeten Zufuhrkanal. Das zu filternde Medium wird in den so gebildeten Zufuhrkanal beispielsweise von der Unterseite, d. h. durch die Bodenplatte 28 eingeleitet und das Konzentrat durch eine Öffnung am entgegengesetzten Ende des Membranstapels, d. h. durch die Deckelplatte 15 abgeführt.

Das Filtrat fließt durch das Abstandsmaterial 24 radial nach außen und tritt am Außenumfang zwischen den äußeren Distanzringen 14 nach außen aus. Dort wird es dann in dem Gehäuse 10 aufgefangen und kann über einen Auslass 30 in dem Gehäuse 10 abgeleitet werden.

In den zentralen Löchern 18 sowie den Löchern 20 sind die beidseitig der jeweiligen Membranträgerplatte 12 gelegenen Membranen 22 miteinander verschweißt. Dazu ist eine am Innenumfang des Loches 20 gelegene ringförmige Schweißnaht sowie eine am Innenumfang des zentralen Loches 18 gelegene Schweißnaht vorgesehen. In den Löchern 18 und 20, d. h. innerhalb der ringförmigen Schweißnähte sind auch die Membranen 22 durchbrochen, so dass sich die Rotorwelle 4 durch die Membranen 22 hindurch erstrecken kann und in den Löchern 20 jeweils ein freier Durchgang für das zuzuführende Medium gebildet wird. Durch die dichte Verbindung der beidseitig einer Membranträgerplatte 12 gelegenen Membran 22 am Innenumfang der Löcher 18 und 20 wird sichergestellt, dass das zu filternde Medium nicht direkt aus den ersten Strömungswegen 26 bzw. dem zentralen Loch 20 in den Bereich zwischen den Membranen 22 und den Membranträgerplatten 12, in welchen das Abstandsmaterial 24 angeordnet ist, eintreten kann. Auf diese Weise ist sichergestellt, dass ein Durchtritt in diesen Bereich nur durch die Membran 22 hindurch möglich ist.

Durch die Zufuhr des zu filternden Mediums durch die Löcher 20, welche im Inneren des Außenumfanges der Membranen 22 und der Membranträgerplatten 12 gelegen sind, wird ein einfacher und kompakter Aufbau des Membranfiltermoduls 2 gewährleistet, da am Außenumfang keine Zufuhrkanäle platziert werden müssen. Gleichzeitig wird eine gute Verteilung des zuzuführenden Mediums in den Freiräumen 26 zwischen den Membranen 22, in welchen die Rotoren 12 angeordnet sind, erreicht, da das Medium direkt in diese Räume eintritt und nicht vom Außenumfang in diese eingeleitet werden muss. Darüber hinaus ist ein sehr einfacher Aufbau der Membranträgerplatten 12 möglich. Diese bedürfen keinerlei spezieller Formgebung bzw. Profilierung an ihren Oberflächen, sondern sind als glatte Scheiben ausgebildet. Insofern können sie leicht aus einem Metallblech geschnitten werden. Dies ermöglicht einen gegenüber aus Kunststoff gebildeten Membranträgerplatte 12 dünneren Aufbau, wodurch die axiale Gesamtlänge des Membranfiltermoduls verkürzt wird.

Zur Zentrierung bzw. Fixierung der Membranträgerplatten 12 in radialer Richtung bezogen auf die Längsachse X der Rotorwelle 4 sind am Außenumfang der Membranträgerplatten 12 und der Membranen 22 Führungsstangen 32 angeordnet. Es sind mindestens drei Führungsstangen 32 gleichmäßig über den Außenumfang des Membranfiltermoduls 2 verteilt angeordnet, so dass Bewegungen der Membranträgerplatten 12 in allen radialen Richtungen verhindert werden können. Es ist zu verstehen, dass jedoch auch mehr als drei Führungsstangen 32 angeordnet werden können. Auf die Führungsstangen 32 sind Distanzstücke 34 aufgesetzt, wobei für jede Stufe des Membranfiltermoduls 2, bestehend aus einer Membranträgerplatte 12 und einem zugehörigen äußeren Distanzring 14, ein Distanzstück 34 vorgesehen ist. Die Distanzstücke 34 weisen eine zentrale Bohrung auf, durch welche sich die Führungsstange 32 erstreckt. Ferner weisen sie in axialer Richtung zwei Abschnitte 36 und 38 auf. In dem Abschnitt 36, dessen axiale Länge der Dicke der Membranträgerplatte 12 und der beidseitig anliegenden Schichten von Abstandsmaterial 34 entspricht, hat einen größeren Außendurchmesser als der Abschnitt 38. Der Abschnitt 38 entspricht in seiner axialen Länge der axialen Dicke eines Distanzringes 14. Die Distanzringe 14 haben einen größeren Außendurchmesser als die Membranträgerplatten 12. Der Abschnitt 36 mit dem größeren Durchmesser des Distanzstückes 34 liegt am Außenumfang der Membranträgerplatte 12 an, während der Abschnitt 38 mit dem kleineren Durchmesser am Außenumfang des Distanzringes 14 anliegt. Auf diese Weise werden sowohl die Membranträgerplatte 12 als auch der Distanzring 14 in radialer Richtung zwischen den Führungsstangen 32 mit den aufgesetzten Distanzstücken 34 fixiert. Die Distanzstücke 34 stellen zusätzlich sicher, dass die einzelnen Membranträgerplatten 12 in definiertem Abstand zueinander gehalten werden und das Abstandsmaterial 24 am Außenumfang zwischen den Distanzringen 14 nicht über ein bestimmtes Maß hinaus gestaucht werden kann, wenn das gesamte Membranfiltermodul 2 durch Verspannen von Bodenplatte 28 und Deckelplatte 15 zusammengepresst wird. Dadurch, dass nur wenige, vorzugsweise drei Führungsstangen 32 am Außenumfang verteilt angeordnet sind, bleibt der Außenumfang zwischen den Führungsstangen 32 frei, so dass in diesen Bereichen das Filtrat aus dem Abstandsmaterial 24 radial nach außen austreten kann.

### Bezugszeichenliste

- 2: - Membranfiltermodul
- 4: - Rotorwelle
- 6: - Riementrieb
- 8: - Antriebsmotor
- 10: - Gehäuse
- 12: - Membranträgerplatte
- 14: - äußerer Distanzring
- 15: - Deckelplatte
- 16: - Rotor
- 18: - zentrales Loch
- 20: - Loch
- 22: - Membran
- 24: - Abstandsmaterial
- 26: - erster Strömungsweg
- 28: - Bodenplatte
- 30: - Auslass
- 32: - Führungsstange
- 34: - Distanzstück
- 36, 38: - Abschnitte des Distanzstückes

- X: - Längsachse

## Patentansprüche

1. Membranfiltermodul (2) mit einer Vielzahl übereinander liegend angeordneter Membranen (22), wobei
zwischen benachbarten Membranen (22) abwechselnd erste (26) und zweite (24) Strömungswege ausgebildet sind, von welchen der erste Strömungsweg (26) der Zufuhr und der zweite Strömungsweg (24) der Filtratabfuhr dient,
ein mehrere erste Strömungswege (26) verbindender Zufuhrkanal (20) vorhanden ist, welcher innerhalb des Außenumfanges der Membranen (22) gelegen ist, jeweils zwischen den Membranen (22), welche einen zweiten Strömungsweg begrenzen, eine Membranträgerplatte (12) angeordnet ist, und der Zufuhrkanal durch jeweils zumindest ein Loch (20) in den Membranträgerplatten (12) gebildet wird, **dadurch gekennzeichnet, dass** die zwei eine Membranträgerplatte (12) einschließenden Membranen (22) am Innenumfang des Loches (20) in der Membranträgerplatte (12) miteinander verbunden sind.

2. Membranfiltermodul (2) nach Anspruch 1, **dadurch gekennzeichnet, dass** die Membranträgerplatte (12) als Scheibe mit planen Oberflächen ausgebildet ist.

3. Membranfiltermodul (2) nach Anspruch 1 oder 2, **dadurch gekennzeichnet, dass** jeweils zwischen den Oberflächen der Membranträgerplatte (12) und den angrenzenden Membranen (22) ein Abstandsmaterial (24) angeordnet ist, durch welches der zweite Strömungsweg verläuft.

4. Membranfiltermodul (2) nach einem der vorangehenden Ansprüche, **dadurch gekennzeichnet, dass** die den Zufuhrkanal definierenden Löcher (20) in den einzelnen Membranträgerplatten (12) zueinander versetzt angeordnet sind.

5. Membranfiltermodul (2) nach einem der vorangehenden Ansprüche, **dadurch gekennzeichnet, dass** die ersten Strömungswege (26) zwischen den Membranen (22) als Freiräume ausgebildet sind, in welchen jeweils ein Rotor (16) angeordnet ist.

6. Membranfiltermodul nach Anspruch 5, **dadurch gekennzeichnet dass** die Rotoren (16) auf einer gemeinsamen Rotorwelle ,(4) angeordnet sind, welche sich durch jeweils ein zentrales Loch (18) in den Membranträgerplatten (12) erstreckt.

7. Membranfiltermodul nach Anspruch 6, **dadurch gekennzeichnet, dass** die jeweils eine Membranträgerplatte (12) einschließenden Membranen (22) am Innenumfang des zentralen Loches (18) miteinander verschweißt sind.

8. Membranfiltermodul nach einem der vorangehenden Ansprüche, **dadurch gekennzeichnet, dass** die zweiten Strömungswege (24) zum Außenumfang der Membranen (22) geöffnet sind.

9. Membranfiltermodul nach einem der vorangehenden Ansprüche, **dadurch gekennzeichnet, dass** zwischen den Membranen (22), welche einen ersten Strömungsweg (26) begrenzen am Außenumfang der Membranen (22) jeweils ein äußerer Distanzring (14) angeordnet ist.

10. Membranfiltermodul nach einem der vorangehenden Ansprüche, **dadurch gekennzeichnet, dass** die Anordnung der übereinander liegenden Membranen (22) durch Führungsstangen (32) fixiert wird, welche außerhalb des Außenumfanges der Membranen (22) angeordnet sind.

11. Membranfiltermodul nach Anspruch 10, **dadurch gekennzeichnet, dass** die Führungsstangen (32) mit dem Außenumfang von zwischen den Membranen (22) angeordneten Membranträgerplatten (12) und/oder äußeren Distanzringen (14) in Kontakt sind.

12. Membranfiltermodul nach Anspruch 11, **dadurch gekennzeichnet, dass** auf den Führungsstangen (32) Distanzstücke (34) angeordnet sind, welche jeweils mit dem Außenumfang der Membranträgerplatten (12) und der äußeren Distanzringe (14) in Kontakt sind.

## Claims

1. A membrane filter module (2) with a multitude of membranes (22) arranged lying over one another, wherein
first (26) and second (24) flow paths are alternately formed between adjacent membranes (22), of which flows paths the first flow path (26) serves for the feed and the second flow path (24) serves for filtrate discharge,
a feed channel (20) connecting several first flow paths (26) is present, which is situated within the outer periphery of the membranes (22), a membrane carrier plate (12) is arranged in each case between the membranes (22) which delimit a second flow path, and the feed channel is formed in each case by way of at least one hole (20) in the membrane carrier plates (12), **characterised in that** the two membranes (22) enclosing a membrane carrier plate (12) are connected to one another at the inner periphery of the hole (20) in the membrane carrier plate (12).

2. A membrane filter module (2) according to claim 1, **characterised in that** the membrane carrier plate (12) is designed as a disk with plane surfaces.

3. A membrane filter module (2) according to claim 1 or 2, **characterised in that** a spacer material (24), through which the second flow path runs, is arranged in each case between the surfaces of the membrane carrier plate (12) and the adjacent membranes (22).

4. A membrane filter module (2) according to one of the preceding claims, **characterised in that** the holes (20) defining the feed channel are arranged offset to one another in the individual membrane carrier plates (12).

5. A membrane filter module (2) according to one of the preceding claims, **characterised in that** the first flow paths (26) between the membranes (22) are designed as free spaces, in which in each case a rotor (16) is arranged.

6. A membrane filter module according to claim 5, **characterised in that** the rotors (16) are arranged on a common rotor shaft (4) which extends in each case through a central hole (18) in the membrane carrier plates (12).

7. A membrane filter module according to claim 6, **characterised in that** the membranes (22) which in each case enclose a membrane carrier plate (12) are welded to one another on the inner periphery of the central hole (18).

8. A membrane filter module (2) according to one of the preceding claims, **characterised in that** the second flow paths (24) are open to the outer periphery of the membranes (22).

9. A membrane filter module (2) according to one of the preceding claims, **characterised in that** in each case an outer spacer ring (14) is arranged on the outer periphery of the membranes (22), between the membranes (22) which delimit a first flow path (26).

10. A membrane filter module (2) according to one of the preceding claims, **characterised in that** the arrangement of the membranes (22) lying above one another is fixed by way of guide rods (32) which are arranged outside the outer periphery of the membranes (22).

11. A membrane filter module according to claim 10, **characterised in that** the guide rods (32) are in contact with the outer periphery of membrane carrier plates (12) which are arranged between the membranes (22) and/or of outer spacer rings (14).

12. A membrane filter module according to claim 11, **characterised in that** spacer pieces (34) are arranged on the guide rods (32) and are in contact in each case with the outer periphery of the membrane carrier plates (12) and of the outer spacer rings (14).

## Revendications

1. Module de filtre à membranes (2) comprenant une pluralité de membranes (22) disposées les unes au-dessus des autres, dans lequel sont formés alternativement, entre des membranes (22) adjacentes, des premiers (26) et deuxièmes (24) trajets d'écoulement, le premier trajet d'écoulement (26) servant à l'alimentation et le deuxième trajet d'écoulement (24) servant à l'évacuation du filtrat, dans lequel est prévu un canal d'alimentation (20) reliant plusieurs premiers trajets d'écoulement (26), qui est situé à l'intérieur de la périphérie extérieure des membranes (22), dans lequel une plaque support de membrane (12) est disposée respectivement entre les membranes (22) qui délimitent un deuxième trajet d'écoulement, et dans lequel le canal d'alimentation est formé à travers respectivement au moins un trou (20) dans les plaques support de membrane (12), **caractérisé en ce que** les deux membranes (22) renfermant une plaque support de membrane (12) sont reliées entre elles sur la périphérie intérieure du trou (20) dans la plaque support de membrane (12).

2. Module de filtre à membranes (2) selon la revendication 1, **caractérisé en ce que** la plaque support de membrane (12) est conçue sous la forme d'un disque présentant des surfaces planes.

3. Module de filtre à membranes (2) selon la revendication 1 ou 2, **caractérisé en ce qu'**est disposé, respectivement entre les surfaces de la plaque support de membrane (12) et les membranes (22) adjacentes, un matériau d'espacement (24) à travers lequel s'étend le deuxième trajet d'écoulement.

4. Module de filtre à membranes (2) selon l'une des revendications précédentes, **caractérisé en ce que** les trous (20) définissant le canal d'alimentation sont disposés dans les différentes plaques support de membrane (12) décalés entre eux.

5. Module de filtre à membranes (2) selon l'une des revendications précédentes, **caractérisé en ce que** les premiers trajets d'écoulement (26) entre les membranes (22) sont conçus en tant qu'espaces libres dans lesquels est disposé respectivement un rotor (16).

6. Module de filtre à membranes selon la revendication 5, **caractérisé en ce que** les rotors (16) sont disposés sur un arbre de rotor (4) commun qui s'étend à travers respectivement un trou central (18) dans les plaques support de membrane (12).

7. Module de filtre à membranes selon la revendication 6, **caractérisé en ce que** les membranes (22) renfermant respectivement une plaque support de membrane (12) sont soudées entre elles sur la périphérie intérieure du trou central (18).

8. Module de filtre à membranes selon l'une des revendications précédentes, **caractérisé en ce que** les deuxièmes trajets d'écoulement (24) sont ouverts vers la périphérie extérieure des membranes (22).

9. Module de filtre à membranes selon l'une des revendications précédentes, **caractérisé en ce qu'**est disposée entre les membranes (22) qui délimitent un premier trajet d'écoulement (26) respectivement une bague d'écartement (14) extérieure sur la périphérie extérieure des membranes (22).

10. Module de filtre à membranes selon l'une des revendications précédentes, **caractérisé en ce que** l'agencement des membranes (22) superposées est fixé par des tiges de guidage (32) qui sont disposées à l'extérieur de la périphérie extérieure des membranes (22).

11. Module de filtre à membranes selon la revendication 10, **caractérisé en ce que** les tiges de guidage (32) sont en contact avec la périphérie extérieure de plaques support de membrane (12) disposées entre les membranes (22) et/ou de bagues d'écartement extérieures (14).

12. Module de filtre à membranes selon la revendication 11, **caractérisé en ce que** sont disposées sur les tiges de guidage (32) des pièces d'écartement (34) qui sont en contact respectivement avec la périphérie extérieure des plaques support de membrane (12) et des bagues d'écartement extérieures (14).
